# EUROPÄISCHE PATENTSCHRIFT

(11) **EP 3 224 850 B1**
(45) Veröffentlichungstag und Bekanntmachung des Hinweises auf die Patenterteilung: **05.06.2019**
(21) Anmeldenummer: 15800791.4
(22) Anmeldetag: 24.11.2015
(51) Int. Cl.: H01H 39/00, H01H 47/00

(54) **SICHERHEITSSCHALTGERÄT ZUM EIN- UND SICHEREN AUSSCHALTEN EINES ELEKTRISCHEN VERBRAUCHERS**
SAFETY SWITCHING DEVICE FOR SWITCHING ON AND SAFELY SWITCHING OFF AN ELECTRICAL LOAD
APPAREIL DE COMMUTATION DE SÉCURITÉ POUR LA MISE EN ET HORS CIRCUIT SÛRE D'UN CONSOMMATEUR ÉLECTRIQUE

(30) Priorität: 25.11.2014 DE 102014117280
(43) Veröffentlichungstag der Anmeldung: 04.10.2017
(73) Patentinhaber: Pilz GmbH & Co. KG, 73760 Ostfildern (DE)
(72) Erfinder: SEID, Joerg, 73760 Ostfildern (DE)
(74) Vertreter: Witte, Weller & Partner Patentanwälte mbB
(86) Internationale Anmeldenummer: PCT/EP2015/077495
(87) Internationale Veröffentlichungsnummer: WO 2016/083369

(56) Entgegenhaltungen:
- WO-A1-00/74192
- DE-A1-102012 103 015
- DE-C1- 4 438 157

## Beschreibung

Die vorliegende Erfindung betrifft ein Sicherheitsschaltgerät zum Ein- und sicheren Ausschalten eines elektrischen Verbrauchers, mit einer sicheren Auswerte- und Steuereinheit, mit einer Ausgangsklemme zum Bereitstellen eines Potentials, mit einem Schaltelement mit einem ersten Arbeitskontakt, wobei über den ersten Arbeitskontakt das Potential mit der Ausgangsklemme verbindbar ist, und mit einer Eingangsklemme zum Aufnehmen eines Eingangssignals, das über die Auswerte- und Steuereinheit auf das Schaltelement einwirkt.

Ein solches Sicherheitsschaltgerät ist bspw. aus der DE 199 54 460 A1 bekannt.

Ferner betrifft die vorliegende Erfindung eine Trenneinrichtung für ein Sicherheitsschaltgerät, das eine Ausgangsklemme zum Bereitstellen eines Potentials und ein Schaltelement mit einem ersten Arbeitskontakt aufweist, wobei über den ersten Arbeitskontakt das Potential mit der Ausgangsklemme verbindbar ist.

Gattungsgemäße Sicherheitsschaltgeräte werden vor allem im industriellen Bereich verwendet, um elektrisch angetriebene Maschinen, wie bspw. eine Presse oder ein Fräswerkzeug, ein- und sicher auszuschalten. Sicherheitsschaltgeräte sind somit Geräte, die in der Steuerungstechnik Sicherheitsfunktionen realisieren, wobei die Sicherheitsfunktion die Aufgabe hat, das im Rahmen einer Gefährdung bestehende Risiko durch geeignete Maßnahmen auf ein akzeptables Maß zu mindern. Sicherheitsfunktionen sind bspw. Not-Aus/Not-Halt-Funktionen, Schutztürfunktionen oder auch die Stillstandsüberwachung eines Antriebs. In der Regel überwacht ein Sicherheitsschaltgerät eine spezifische Funktion, wobei durch Verschaltung mit weiteren Sicherheitsschaltgeräten eine Gesamtüberwachung einer Maschine oder Anlage sichergestellt werden kann.

Sicherheitsschaltgeräte unterscheiden sich primär in ihrem technologischen Aufbau. So beschreibt die eingangs genannte DE 199 54 460 A1 bspw. ein klassisches Sicherheitsschaltgerät auf der Basis kontaktbehafteter Relaistechnik. Hierbei werden ein oder mehrere Sicherheitsrelais eingesetzt, um einen elektrischen Verbraucher in einer Notfallsituation abzuschalten, bspw. indem dieser stromlos geschaltet wird. Der Steuerkreis der Sicherheitsrelais ist bspw. über einen Notausschalter mit einem Potential verbunden und die Arbeitskontakte im normalen Betrieb geschlossen. Wird der Notausschalter betätigt, werden die Arbeitskontakte geöffnet. Über die in der Regel in Serie geschaltet Arbeitskontakte der Relais kann direkt oder indirekt eine Stromzufuhr zu der zu überwachenden Maschine oder Anlage gesteuert werden.

Neben den klassischen Sicherheitsschaltgeräten werden zunehmend Sicherheitsschaltgeräte eingesetzt, die eine elektronische Auswertung aufweisen. Die elektronische Auswertung kann Eingangssignale verschiedener Signalgeber aufnehmen und auswerten sowie zur Fehlererkennung eingesetzt werden. Ausgangsseitig verfügen diese Sicherheitsschaltgeräte über kontaktbehaftete potentialfreie Ausgänge, reine elektronische Halbleiterausgänge oder eine Kombination aus beiden. Ein vollelektronisches Sicherheitsschaltgerät ist bspw. in der DE 100 11 211 B4 offenbart.

Unabhängig von ihrem technologischen Aufbau müssen alle Sicherheitsschaltgeräte so ausgebildet sein, dass - bei richtiger Beschaltung - weder ein Fehler im Gerät noch ein externer durch einen Sensor oder Aktor verursachter Fehler zum Verlust der Sicherheitsfunktion führt. Hierzu werden Sicherheitsschaltgeräte in der Regel zweikanalig redundant ausgelegt, so dass trotz eines Fehlers in einem Kanal die Sicherheitsfunktion durch einen zweiten Kanal wahrgenommen werden kann. Problematisch bleiben bei einer zweikanaligen Struktur sog. Common Cause Failures, d.h. Fehler, die auf eine gemeinsame Ursache zurückgehen. So können beispielsweise bei klassischen Sicherheitsschaltgeräten zwei Relaiskontakte gleichzeitig verschweißen und damit beide Kanäle unwirksam werden lassen. Dies würde zu einem vollständigen Verlust der Sicherheitsfunktion führen.

Eine Maßnahme zur Minimierung des Risikos von Common Cause Failures ist eine Erhöhung der Redundanz. Bspw. sind Sicherheitsschaltgeräte bekannt, die drei oder mehrkanalig ausgebildet sind und auf diese Weise die Effekte von Common Cause Failures reduzieren können. Ebenso sind schaltungstechnische Lösungen bekannt, die es ermöglichen, insbesondere die Schaltungselemente unterschiedlich zu belasten und so einem gleichzeitigen Ausfall vorzubeugen. So beschreibt die eingangs erwähnt DE 199 54 460 A1 bspw. ein auf Relaistechnik basierendes Sicherheitsschaltgerät, bei dem die redundanten Schaltrelais unterschiedliche Nenn-Schaltvermögen haben. Durch diese Maßnahme schalten die Relais konstruktionsbedingt zu unterschiedlichen Zeitpunkten, wodurch im normalen Arbeitsbetrieb zumindest ein Schaltelement nicht unter Last schaltet. Damit wird das eine Schaltelement einer unterschiedlichen, insbesondere geringeren Belastung ausgesetzt, wodurch die Wahrscheinlichkeit eines gleichzeitigen Ausfalls verringert werden kann.

Die vorstehend genannten Ansätze zur Reduzierung von Common Cause Failures sind jedoch in der Regel teuer und mit erheblichem Aufwand verbunden. Insbesondere das Hinzufügen einer zusätzlichen Redundanz erhöht die Herstellungskosten bei einfachen Sicherheitsschaltgeräten unverhältnismäßig. Darüber hinaus wird durch die zusätzliche Redundanz lediglich die Wahrscheinlichkeit eines Fehlers mit gemeinsamer Ursache reduziert. Ausgeschlossen wird ein solcher Fehler hingegen nicht.

Aus dem allgemeinen Stand der Technik ist bekannt, elektrische Geräte mit Sicherungen auszustatten, die im Falle eines Überstroms auslösen. Bekannte Überstromschutzeinrichtungen, die auch als OCP (=Over Current Protection) bezeichnet werden, sind Schmelzsicherungen, elektrische Sicherungen oder elektromechanische Leistungsschutzschalter. Den Überstromschutzeinrichtungen kann darüber hinaus ein Fehlerstrom-Schutzschalter vorgeschaltet sein, der gefährlich hohe Fehlerströme gegen Erde detektiert und ebenfalls die Stromzufuhr trennt. Ein solcher Fehlerstrom-Schutzschalter ist beispielsweise aus der WO 00/74192 A1 bekannt.

Im Hinblick auf Sicherheitsschaltgeräte ist bspw. eine Überstromschutzeinrichtung aus DE 10 2013 101 050 A1 bekannt. DE 10 2013 101 050 A1 offenbart u.a. ein Netzteil, welches bei einem Überstrom die Stromzufuhr zu einem Gerät mit einem Masseanschluss kurzschließt. Eine solche Beschaltung wird allgemeint auch als "Crow-bar"-Schaltung bezeichnet. Der Kurzschluss führt zu einem Stromanstieg in der Stromzufuhr, wodurch eine in der Stromzufuhr in Serie liegende Schmelzsicherung auslöst und die Stromzufuhr auftrennt. Im Ergebnis wird das Sicherheitsschaltgerät physisch von der Stromzufuhr getrennt, so dass keine Gefahr mehr von diesem ausgeht. Ein derartiges "Abklemmen" der Versorgungsspannung führt jedoch auch dazu, dass jegliche Kontrollmöglichkeit über das Sicherheitsschaltgerät verloren geht. Insbesondere ist nach Auslösen der Sicherung das Sicherheitsschaltgerät nicht mehr diagnosefähig, d.h. es kann nicht mehr von sich aus seinen Ausfall an eine übergeordnete Steuerung melden, noch kann eine übergeordnete Steuerung unmittelbar einen Grund für den Fehler beim Schaltgerät erfragen. Dies ist besonders im Hinblick auf eine komplexe Anlage mit einer Vielzahl von Sicherheitsschaltgeräten problematisch.

Weitere Überstromschutzeinrichtungen, die auf einem elektromechanischen Prinzip beruhen, sind beispielsweise aus dem Kfz-Bereich bekannt. So offenbaren DE 41 10 240 C1 und EP 0 725 412 A2 Sicherungsvorrichtungen zur Absicherung eines Hauptstrompfads in einem Kraftfahrzeug. Auch hier wird ein Strompfad auf einen Überstrom hin überwacht und beim Überschreiten einer gewissen Stromstärke durch ein Trennelement physikalisch gekappt. Wegen der hohen Ströme, die bei einem Kurzschluss im Hauptstrompfad auftreten können, wird neben einem elektromechanischen Aktuator u.a. auch ein mit einer Sprengkapsel versehendes Trennelement vorgeschlagen, welches schnell und zuverlässig eine Hauptstromleitung zerschlagen kann. Die Trennvorrichtung und ein entsprechender Sensor zum Bestimmen des Stroms im Hauptstrompfad sind möglichst nahe an der Batterie des Fahrzeugs vorgesehen, so dass im Fehlerfall vorzugsweise das gesamte Bordnetz stromlos geschaltet werden kann. Nachteilig ist auch bei diesen Schutzeinrichtungen, dass nach Auftrennen des Hauptstrompfads die Sicherungseinrichtung selbst nicht mehr diagnosefähig ist.

Vor diesem Hintergrund ist es eine Aufgabe der vorliegenden Erfindung, ein alternatives Sicherheitsschaltgerät zum fehlersicheren Abschalten einer Maschine anzugeben, das im Hinblick auf Common Cause Failures und andere Fehler innerhalb des Sicherheitsschaltgeräts eine besonders hohe Sicherheit bietet und das dabei kostengünstig ist.

Gemäß einem Aspekt der vorliegenden Erfindung wird diese Aufgabe gelöst durch ein Sicherheitsschaltgerät eingangs genannter Art, das eine Trenneinrichtung aufweist, mit einem Kontaktstück, einem Antriebselement und einem Trennelement, wobei das Antriebselement dazu ausgebildet ist, das Trennelement von einer ersten in eine zweite Position mechanisch zu bewegen, wobei das Kontaktstück und der erste Arbeitskontakt in Reihe zueinander das Potential mit der Ausgangsklemme elektrisch verbinden, wobei das Trennelement das Kontaktstück in der zweiten Position irreversibel entzweit, und wobei auch nach Auslösen der Trenneinrichtung das Sicherheitsschaltgerät vollständig diagnosefähig ist.

Gemäß einem weiteren Aspekt der vorliegenden Erfindung wird diese Aufgabe ferner gelöst durch eine Trenneinrichtung für ein Sicherheitsschaltgerät, das eine Ausgangsklemme zum Bereitstellen eines Potentials und ein Schaltelement mit einem ersten Arbeitskontakt aufweist, wobei über den ersten Arbeitskontakt das Potential mit der Ausgangsklemme verbindbar ist, mit einem Kontaktstück, einem Antriebselement und einem Trennelement, wobei das Antriebselement dazu ausgebildet ist, das Trennelement von einer ersten in eine zweite Position mechanisch zu bewegen, wobei das Kontaktstück und der erste Arbeitskontakt in Reihe zueinander das Potential mit der Ausgangsklemme elektrisch verbinden, wobei das Trennelement das Kontaktstück in der zweiten Position irreversibel entzweit, und wobei auch nach Auslösen der Trenneinrichtung das Sicherheitsschaltgerät vollständig diagnosefähig ist.

Es ist somit eine Idee der vorliegenden Erfindung, bei einem Sicherheitsschaltgerät zur Absicherung einer Anlage oder Maschine eine weitere Trenneinrichtung vorzusehen, die bei Versagen eines oder mehrerer Elemente des Sicherheitsschaltgeräts eine Sicherheitsfunktion auslösen kann. Dabei beruht die Trenneinrichtung bewusst auf einem anderen Funktionsprinzip als die übrigen Elemente des Schaltgeräts, um so Fehler mit gemeinsamer Ursache ausschließen zu können. Durch die neue Trenneinrichtung wird somit nicht nur eine Redundanz erhöht, sondern vielmehr eine Diversität bereitgestellt, mittels derer auf einfache Weise ein Ausfall aufgrund gemeinsamer Ursache ausgeschlossen werden kann.

Insbesondere ist die Trenneinrichtung als irreversibler Einwegschalter ausgebildet, der beim Auslösen eine Struktur des Schaltgeräts physikalisch derart zerstört, dass ein Wiederanlaufen der technischen Anlage im unsicheren Zustand ausgeschlossen werden kann. Die neue Trenneinrichtung basiert somit auf dem Prinzip der "ultima ratio" und führt als letztes Mittel das Sicherheitsschaltgerät unmittelbar in einen sicheren Zustand über, vorzugweise ohne dabei von einer externen Energiezufuhr abhängig zu sein. Gleichwohl bedingt das Auslösen der Trenneinrichtung keinen vollständigen Kontrollverlust über das Sicherheitsschaltgerät selbst, wie es beispielsweise beim Auslösen einer Sicherung in der Energiezufuhr des Sicherheitsschaltgeräts der Fall seien würde. Vielmehr bleibt das Sicherheitsschaltgerät auch nach Auslösen der Trenneinrichtung vollständig diagnosefähig. Dies ist besonders vorteilhaft, wenn das Sicherheitsschaltgerät Teil eines komplexen Verbundes ist oder selbst derart ausgestaltet ist, dass neben der einen Sicherheitsfunktion weitere Funktionen von dem Sicherheitsschaltgerät wahrgenommen werden können. Insbesondere bei programmierbaren Sicherheitssteuerungen, bei denen das Schaltgerät als eines von vielen Modulen der Steuerung ausgebildet ist, ist es vorteilhaft, wenn auch nach Auslösen der "ultima ratio" einer einzelnen Sicherheitsfunktion, die Steuerung weiterhin funktionsfähig bleibt.

Darüber hinaus kann die neue Trenneinrichtung in einer Vielzahl von Sicherheitsschaltgräten mit unterschiedlichem Aufbau eingesetzt werden. So ist die erfindungsgemäße Trenneinrichtung sowohl für klassische kontaktbehaftete Sicherheitsschaltgeräte mit Relaistechnik als auch für vollelektronische Geräte mit Halbleiterausgängen verwendbar. Infolge dieser vielfältigen Einsatzmöglichkeiten ist die neue Trenneinrichtung, insbesondere im Hinblick auf große Stückzahlen, auch günstiger als Sicherheitsschaltgeräte, bei denen für eine Diversität unterschiedliche Bauteile gleicher Wirkung eingesetzt werden, da insgesamt weniger Bauteile vorgehalten werden müssen.

Das neue Sicherheitsschaltgerät und die neue Trenneinrichtung sind somit sicherer und kostengünstiger als bekannte Lösungen aus dem Stand der Technik. Die genannte Aufgabe ist daher vollständig gelöst.

In einer Ausgestaltung bewegt das Antriebselement das Trennelement von der ersten in die zweite Position, wenn das Schaltelement eine Fehlfunktion, insbesondere verschweißte Arbeitskontakte, aufweist. Vorzugsweise ist die Auswerte- und Steuereinheit dazu ausgebildet, die Fehlfunktion zu detektieren und in Abhängigkeit davon das Antriebelement anzusteuern, um das Trennelement von der ersten in die zweite Position zu bewegen.

In dieser Ausgestaltung ist das Antriebselement der Trenneinrichtung direkt oder indirekt mit dem Schaltelement gekoppelt. Insbesondere ist das Antriebselement mit der Steuerung des Schaltelements verbunden, so dass im Falle einer Fehlfunktion des Schaltelements das Antriebselement auslöst und über das Trennelement die Sicherheitsfunktion aktiviert. Bspw. können bei Sicherheitsschaltgeräten mit Relaistechnik zwei Arbeitskontakte gleichzeitig verschweißen und ausfallen. Ein derartiger Fehler ist erkennbar, jedoch steht bei gewöhnlichen Sicherheitsschaltgeräten keine Abhilfe bereit. Durch Koppeln der neuen Trenneinrichtung mit der Schaltelementsteuerung kann auf einfache Weise bei einem gefährlichen Verschweißen Abhilfe geschaffen werden.

In einer weiteren Ausgestaltung weist das Sicherheitsschaltgerät eine Antriebsenergie zum Bewegen des Trennelements von der ersten in die zweite Position auf, wobei die Antriebsenergie im Antriebselement gespeichert ist.

In dieser Ausgestaltung ist eine Antriebsenergie, vorzugweise eine mechanische oder thermische Energie, im Antriebselement selbst gespeichert. Durch diese Maßnahme kann die Trenneinrichtung auch dann auslösen, wenn die betriebsmäßige Energieversorgung des Sicherheitsschaltgeräts, bspw. eine Spannungsversorgung, ausfällt. Das neue Sicherheitsschaltgerät ist so besonders robust und sicher gegen Ausfälle geschützt.

In einer weiteren Ausgestaltung weist das Antriebselement einen Treibstoff und eine Zündvorrichtung auf.

In dieser Ausgestaltung ist das Antriebselement mit einem Treibstoff versehen, der von einer Zündvorrichtung entzündet wird, wenn das Antriebselement auslösen soll. Durch Abbrennen des Treibstoffs wird das Trennelement bewegt und besonders effektiv das Kontaktstück irreversibel entzweit. Die Trenneinrichtung wird somit über einen vollständig anderen Mechanismus betätigt als die Schaltelemente, die für das Bereitstellen des Potentials an den Ausgangsklemmen verwendet werden. Je größer der funktionale Unterschied zwischen der Trenneinrichtung und den Schaltelemente ist, desto geringer ist die Wahrscheinlichkeit eines Ausfalls aufgrund eines gemeinsamen Fehlers. Infolge dessen wir durch diese Maßnahme eine besonders hohe Diversität erreicht.

In einer weiteren Ausgestaltung weist das Antriebselement Treibstoff auf, der mit einer Geschwindigkeit verbrennt, die kleiner ist als die Schallgeschwindigkeit in dem Treibstoff.

In dieser Ausgestaltung wird das Trennelement durch Verbrennen eines Treibstoffs in Bewegung versetzt, wobei der Treibstoff bzw. die Menge des Treibstoffs so gewählt ist, dass dieser mit einer Geschwindigkeit verbrennt, die kleiner ist als die Schallgeschwindigkeit innerhalb des Treibstoffs. Der Treibstoff wird somit nicht zur Detonation gebracht, sondern zur Deflagration. Hierbei handelt es sich um einen schnellen Verbrennungsvorgang, bei dem der Explosionsdruck nur durch die entstehenden, sich ausdehnenden Gase hervorgerufen wird. Bei der Deflagration liegt der Verbrennungsdruck zumeist in der Größenordnung von 10 bar. Durch den entstehenden Druck wird das Trennelement bewegt und das Kontaktstück sicher und schnell getrennt, ohne dass eine übermäßige Gefahr für Bedienpersonen aufgrund der Verbrennung besteht.

In einer weiteren Ausgestaltung weist das Sicherheitsschaltgerät ein weiteres oder mehrere Kontaktstücke auf, welches in der zweiten Position des Trennelements mechanisch und irreversibel entzweit ist.

In dieser Ausgestaltung wird somit ein weiteres oder mehrere Kontaktstücke durch das Trennelement physikalisch zerstört. So können auf einfache und kostengünstig Weise mehrere Strompfade von einer einzelnen Trenneinrichtung sicher getrennt werden.

In einer weiteren Ausgestaltung weist das Sicherheitsschaltgerät ein zweites Schaltelement auf, mit einem zweiten Arbeitskontakt, der zum ersten Arbeitskontakt und dem Kontaktstück in Reihe geschaltet ist.

In dieser Ausgestaltung ist das Sicherheitsschaltgerät somit zweikanalig ausgebildet mit der Trenneinrichtung als zusätzliche Absicherung. In dieser Ausgestaltung kommt die irreversibel Sicherung somit nur zum Tragen, wenn die redundanten Schaltelemente ausfallen. Dies ist besonders vorteilhaft, da so nur in wenigen Sonderfällen, bspw. beim gleichzeitigen Verschweißen der Arbeitskontakte beider Schaltelemente, das Sicherheitsschaltgerät stillgelegt wird.

In einer weiteren Ausgestaltung weist das Sicherheitsschaltgerät ein weiteres Antriebselement auf, welches unabhängig von dem Antriebselement das Trennelement bewegen kann.

In dieser Ausgestaltung ist das Antriebselement redundant ausgelegt d.h. die Trenneinrichtung verfügt über zwei separate Auslösemechanismen. Infolge dessen ist es möglich, auf die für ein Sicherheitsschaltgerät übliche redundante Auslegung der Schaltelemente zu verzichten. Das Sicherheitsschaltgeräte kann somit im Wesentlichen weiterhin zweikanalig aufgebaut sein, wobei die zusätzliche Sicherheit durch eine doppelte Auslegung des Antriebselements gewährleistet wird. Vorteilhafterweise kann bspw. auf ein bauraumintensives mechanisches Schaltrelais zu Gunsten eines zweiten kleineren Antriebselements verzichtet werden, wodurch das Sicherheitsschaltgerät insgesamt kostengünstig und kleinbauend hergestellt werden kann.

In einer weiteren Ausgestaltung weist das Sicherheitsschaltgerät eine Leiterplatte auf, auf der das Schaltelement und die Trenneinrichtung angeordnet sind.

In dieser Ausgestaltung sind das Schaltelement und die Trenneinrichtung auf einer einzelnen Leiterplatte angeordnet. Durch diese Maßnahme kann das Sicherheitsschaltgerät besonders kleinbauend realisiert werden. Besonders vorteilhaft können alle elektronischen Bauelemente des Sicherheitsschaltgeräts einschließlich der Trenneinrichtung auf der einzelnen Leiterplatte angeordnet sein.

In einer weiteren Ausgestaltung weist das Sicherheitsschaltgerät eine Leiterplatte mit mindestens einer Leiterbahn auf, wobei das Kontaktstück ein Abschnitt der mindestens einen Leiterbahn ist.

In dieser Ausgestaltung ist somit das Kontaktstück ein Teilstück der Leiterbahn, welches vom Trennelement entzweit werden kann. Die Leiterbahn stellt dabei die elektrische Verbindung zwischen dem Potential, den Arbeitskontakten der Schaltelemente, dem Kontaktstück und der Ausgangsklemme bereit. Mit anderen Worten bildet die Leiterbahn einen vom Sicherheitsschaltgerät schaltbaren Strompfad, wobei das Kontaktstück hiervon ein Teilstück ist. Die Maßnahme hat den Vorteil, dass kein zusätzliches Bauelement für das Kontaktstück benötigt wird, so dass die Trenneinrichtung besonders günstig realisiert werden kann.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: eine vereinfachte Darstellung für ein bevorzugtes Einsatzgebiet des neuen Sicherheitsschaltgeräts,
- Figur 2: eine schematische Darstellung eines bevorzugten Ausführungsbeispiels des neuen Sicherheitsschaltgeräts,
- Figur 3a: eine Querschnittsdarstellung eines Ausführungsbeispiels der neuen Trenneinrichtung im nicht betätigtem Zustand,
- Figur 3b: eine Querschnittsdarstellung eines Ausführungsbeispiels der neuen Trenneinrichtung im betätigtem Zustand,
- Figur 4: ein Ausführungsbespiel einer neuen Trenneinrichtung in einer Draufsicht,
- Figur 5: eine schematische Darstellung eines weiteren Ausführungsbeispiels des neuen Sicherheitsschaltgeräts, und
- Figur 6: eine schematische Darstellung eines weiteren Ausführungsbeispiels des neuen Sicherheitsschaltgeräts mit einer redundanten Trenneinrichtung.

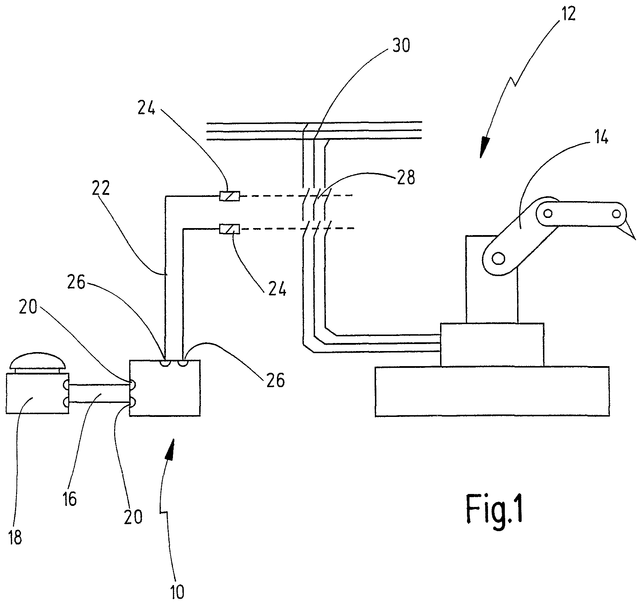

Figur 1 zeigt ein bevorzugtes Einsatzgebiet des neuen Sicherheitsschaltgeräts 10. Das Sicherheitsschaltgerät 10 dient hier der Absicherung einer technischen Anlage 12, die durch einen automatisiert arbeitenden Roboter 14 angedeutet ist. Es versteht sich, dass die Erfindung nicht auf die Überwachung einer derartigen Anlage beschränkt ist. Vielmehr ist vorliegend unter einem elektrischen Verbraucher jede Maschine im Sinne der Maschinenrichtlinie 2006/42/EG zu verstehen. Die Figur 1 zeigt insbesondere die Verwendung des neuen Sicherheitsschaltgeräts 10 zur Realisierung einer Not-Aus-Funktion. Darüber hinaus kann das neue Sicherheitsschaltgerät gleichermaßen auch für andere Sicherheitsfunktionen, beispielsweise Not-Halt, Schutztürfunktion oder auch die Stillstandsüberwachung eines Antriebs o.ä., verwendet werden.

Im vorliegenden Ausführungsbeispiel ist das Sicherheitsschaltgerät 10 über Leitungen 16 mit einem Not-Aus-Taster 18 verbunden. Der Not-Aus-Taster 18 ist hier so ausgebildet, dass er über die Leitungen 16 an den Eingangsklemmen 20 des Sicherheitsschaltgeräts ein Eingangssignal bereitstellt, beispielsweise indem ein Potential im nicht betätigten Zustand über den Not-Aus-Taster 18 zu den Eingangsklemmen 20 durchgeschleift wird. In einem anderen Ausführungsbeispiel könnte ein Eingangssignal jedoch auch von einem anderen Signalgeber bspw. einer Lichtschranke, einem Lichtgitter oder einem Kontaktschalter unmittelbar als sogenanntes OSSD-(Output Signal Switching Device)-Signal bereitgestellt werden.

Ausgangsseitig steuert das Sicherheitsschaltgerät 10 hier über weitere Leitungen 22 externe Schützen 24 an, wobei im normalen Betrieb an den Ausgangsklemmen 26 ein Potential bereitgestellt wird, so dass die Schütze 24 angezogen und ihre Arbeitskontakte 28 geschlossen sind. Die Arbeitskontakte 28 der Schütze 24 sind wiederum in Reihe geschaltet in einer Stromversorgung 30 der technischen Anlage 12 angeordnet.

Das Sicherheitsschaltgerät 10 ist, wie anhand der folgenden Figuren näher erläutert, dazu ausgebildet, in Abhängigkeit des Eingangssignals an den Eingangsklemmen 20 ein Potential an den Ausgangsklemmen 26 zum Anziehen der externen Schütze 24 bereitzustellen. Wird der Not-Aus-Taster 18 betätigt, ändert sich das Eingangssignal, woraufhin das Sicherheitsschaltgerät die Ausgangsklemmen 26 von dem Potential trennt, so dass die externen Schütze 24 abfallen. Die technische Anlage 12 wird daraufhin stromlos geschaltet und in einen sicheren Zustand überführt. Es versteht sich, dass das Ansteuern von externen Schützen nur eine Möglichkeit darstellt, eine Maschine in einen sicheren Zustand zu überführen. Alternativ kann eine Potentialänderung an den Ausgangsklemmen 26 auch als binäres Ausgangssignal betrachtet werden, über das andere Maßnahmen auslösbar sind, die dem Schutz von Personen und Material dienen.

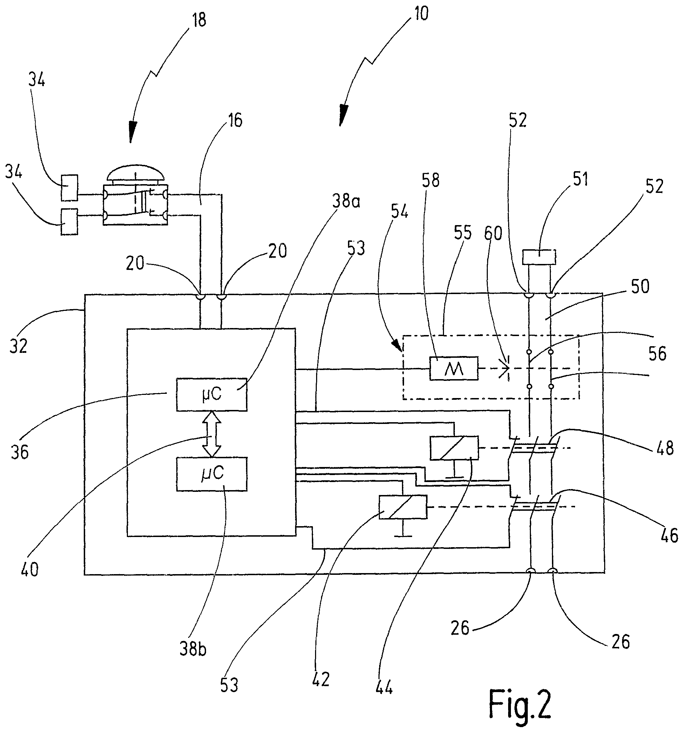

Figur 2 zeigt ein bevorzugtes Ausführungsbeispiel des neuen Sicherheitsschaltgeräts 10. Gleiche Bezugszeichen bezeichnen dabei gleiche Teile wie in der Figur 1.

Das Sicherheitsschaltgerät 10 ist hier in einem nicht näher dargestellten Gehäuse 32 angeordnet. Über Ein- und Ausgangsklemmen 20, 26 sind die verschiedenen Anschlüsse des Sicherheitsschaltgerätes am Gehäuse 32 nach außen geführt. Exemplarisch ist auch in diesem Ausführungsbeispiel ein Not-Aus-Taster 18 an das Sicherheitsschaltgerät 10 über Leitungen 16 angeschlossen. Bei dem Not-Aus-Taster 18 handelt es sich hier um ein Schaltelement mit zwei Arbeitskontakten, die zueinander zwangsgeführt sind, und je ein Potential 34 im normalen Betrieb an die Eingangsklemmen 20 durchschleifen.

Die Eingangsklemmen 20 sind mit einer Auswerte- und Steuereinheit 36 verbunden. Die Auswerte- und Steuereinheit 36 ist hier aus zwei Mikrocontrollern 38a, 38b gebildet, die ein Eingangssignal an den Eingangsklemmen 20 fehlersicher auswerten und entsprechende Steuerbefehle bereitstellen. Wie hier durch den Pfeil 40 angedeutet, sind die Mikrocontroller 38a, 38b dazu ausgebildet, sich gegenseitig zu überwachen. Vorzugsweise sind die Mikrocontroller 38a, 38b von unterschiedlichen Herstellern, wie hier durch die kursive Schreibweise angedeutet, so dass Fehler aufgrund gemeinsamer Ursache innerhalb der Mikrocontroller 38a, 38b vermieden werden können.

Über die Steuerbefehle werden in diesem bevorzugten Ausführungsbeispiel ein erstes und ein zweites Schaltelement 42, 44 angesteuert. Der erste Arbeitskontakt 46 des ersten Schaltelements 42 und der zweite Arbeitskontakt 48 des zweiten Schaltelements liegen in Reihe geschaltet in einem Strompfad 50, über den ein Potential an den Ausgangsklemmen 26 bereitgestellt werden kann. Der Strompfad 50, der erste Arbeitskontakt 46 und der zweite Arbeitskontakt 48 sind in diesem Ausführungsbeispiel redundant aufgebaut. Die Arbeitskontakte 46, 48 verfügen somit über zwei zueinander zwangsgeführte Kontaktbrücken, die von den Schaltelementen 42, 44 bewegt werden können, um den Strompfad 50 zu öffnen oder zu schließen. Das Potential 51, welches an den Ausgangsklemmen 26 bereitgestellt wird, wird dem Strompfad 50 hier über weitere Klemmen 52 von extern hinzugefügt. In anderen Ausführungsbeispielen kann dieses Potential auch unmittelbar vom Sicherheitsschaltgerät 10 selbst bereitgestellt werden.

Im normalen Betrieb, d.h., wenn der Not-Aus-Taster 18 nicht betätigt ist, liegt das Potential 34 an den Eingangsklemmen 20 an. Die Auswerte- und Steuereinheit 36 wertet das Potential an den Eingangsklemmen 20 aus und steuert die Schaltelemente 42, 44 an, so dass der Strompfad 50 geschlossen ist und an den Ausgangsklemmen 26 das über die Klemmen 52 hinzugeführte Potential 51 bereitgestellt wird. Wird der Not-Aus-Taster 18 betätigt, liegt auch das Potential 34 nicht mehr an den Eingängen 20 an, woraufhin die Auswerte- und Steuereinheit 36 die Schaltelemente 42, 44 ansteuert und den Strompfad 50 öffnet. Somit liegt auch an den Ausgangsklemmen 26 kein Potential 51 mehr an, woraufhin beispielsweise externe Schütze abfallen und eine technische Anlage, wie zuvor in Bezug auf Figur 1 beschrieben, sicher gestoppt werden kann.

Im vorliegenden Ausführungsbeispiel sind die wesentlichen Komponenten redundant vorhanden, d.h. das Sicherheitsschaltgerät 10 weist einen ersten und einen zweiten Kanal auf, wobei die Kanäle unabhängig voneinander je die Sicherheitsfunktion, also in diesem Beispiel das Bereitstellen eines Potential an den Ausgangsklemmen zum Ansteuern der externen Schütze, ausführen können. Über eine zwangsgeführte Rückführung 53 der Arbeitskontakte 46, 48 zur Auswerte- und Steuereinheit 36 kann zudem die Funktionsfähigkeit der Schaltelemente 42, 44 überprüft werden. Insgesamt ist es somit möglich, bei einem Fehler in einem der Kanäle nicht nur ein sicheres Abschalten der technischen Anlage zu gewährleisten, sondern auch einen Fehler innerhalb einer der Kanäle zu erkennen.

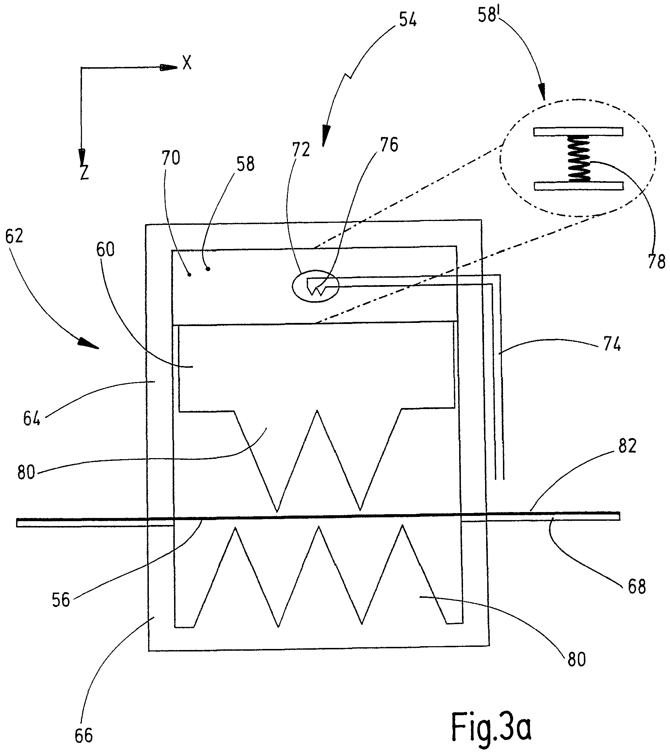

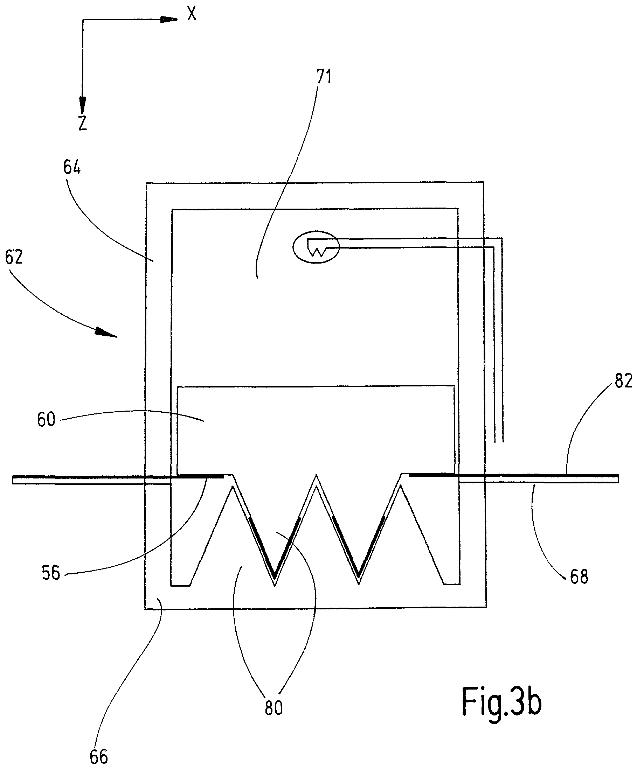

Das Sicherheitsschaltgerät 10 verfügt darüber hinaus über eine Trenneinrichtung 54, die in einigen Ausführungsbeispielen in einem eigenen Gehäuse 55 mit elektrischen Anschlusskontakten gekapselt ist. Die Trenneinrichtung 54 weist mindestens ein Kontaktstück 56 auf, welches hier als Teil des Strompfads 50 ausgebildet ist. In dem hier gezeigten Ausführungsbeispiel ist dabei für jeden Kanal des Strompfads 50 ein separates Kontaktstück vorgesehen. Darüber hinaus verfügt die Trenneinrichtung 54 über ein Antriebselement 58 und ein Trennelement 60. Das Trennelement 60 ist hier in seiner Funktion durch eine Sperrklinke im Blockschaltbild angedeutet und wird mit Bezug auf die Fig. 3 noch näher erläutert.

Das Antriebselement 58 ist hier mit der Auswerte- und Steuereinheit 36 verbunden und kann über diese mittels eines Steuerbefehls aktiviert werden. Die Ansteuerung über die Auswerte- und Steuereinheit 36 ist nicht zwingend. In anderen Ausführungsbeispielen kann das Antriebselement 58 direkt mit dem zuvor erwähnten Rückführkreis 53 oder den Schaltelementen selbst gekoppelt sein, um bspw. eine Fehlfunktion dieser zu detektieren. Sobald das Antriebselement 58 aktiviert wird, bewegt es, wie anhand der Fig. 3a und 3b noch näher erläutert, das Trennelement 60 von einer ersten in eine zweite Position. Dabei durchtrennt das Trennelement 60 irreversibel das Kontaktstück 56 und lässt sich, wie durch die Sperrklinke angedeutet, nicht zurücksetzen. Mit anderen Worten trennt die Trenneinrichtung 54 bei Aktivierung den Strompfad 50 physikalisch und löst unabhängig von den Schaltelementen 42, 44 die Sicherheitsfunktion aus. Hierbei werden die Ausgangsklemmen 26 unwiederbringlich von dem Potential getrennt.

Die Ansteuerung und Aktivierung der Trenneinrichtung 54 erfolgt dabei vorzugsweise nur, wenn ein Fehler in beiden Kanälen, beispielsweise durch das gleichzeitige Verschweißen der Arbeitskontakte des ersten und des zweiten Schaltelements 42, 44, vorliegt. Das Prinzip der Trenneinrichtung 54 ist dabei grundlegend verschieden zum Prinzip der Schaltelemente 42, 44. So beruhen die Schaltelemente 42, 44 vorzugsweise auf einem "Ruhestromrelais"-Prinzip, d.h. sie sind im normalen Betrieb aktiv betätigt und ihre Arbeitskontakte geschlossen. Die Trenneinrichtung 54 hingegen ist im normalen Betrieb passiv und wird erst in Bedarfsfall aktiv ausgelöst. Die Trenneinrichtung 54 erhöht somit nicht nur vorteilhaft die Redundanz, sondern vielmehr die Diversität des Sicherheitsschaltgeräts 10.

Die Figuren 3a und 3b beschreiben ein bevorzugtes Ausführungsbeispiel der neuen Trenneinrichtung 54 in einem Bereitschaftszustand und einem aktivierten Zustand. Die neue Trenneinrichtung 54 weist hier ein Gehäuse 62 mit einem Oberteil 64 und einem Unterteil 66 auf. Das Ober- und Unterteil 64, 66 sind vorzugsweise zylindrische Hohlkörper mit einer offenen und einer geschlossenen Stirnfläche. Die offenen Stirnflächen sind auf sich gegenüberliegenden Seiten einer Leiterplatte 68 angeordnet, so dass Ober - und Unterteil 64, 66 ein geschlossenes zylindrisches Gehäuse 62 bilden, wobei die Leiterplatte 68 vorzugweise parallel zu den Stirnflächen das Gehäuse 62 schneidet.

In diesem bevorzugten Ausführungsbeispiel ist im Oberteil 64 ein Antriebselement 58 in Form eines entzündlichen Treibstoffes 70 angeordnet. Der Treibstoff 70 ist vorzugsweise in einem geeigneten Behältnis am Boden des zylindrischen Oberteils 64 flächig angeordnet. Bei dem Treibstoff 70 kann es sich beispielsweise um einen Treibstoff in fester bzw. semifester Form handeln, der in das Oberteil 64 eingepresst wird. Ein Beispiel für solch einen Treibstoff sind Natriumazid-(NaN₃)- Verbindungen, wie sie in gängigen Airbags im Kfz eingesetzt werden. Zum Entzünden des Treibstoffs 70 ist ferner eine Zündvorrichtung 72 vorgesehen, die in diesem Ausführungsbeispiel elektrisch ausgelöst werden kann, wie hier durch die Leitungen 74 und die Zündspule 76 angedeutet ist. Alternativ kann das Antriebselement jedoch auch mechanisch ausgebildet seien, beispielsweise als Springfeder 78, wie hier gestrichelt mit Bezugszeichen 58' angedeutet ist.

In einem besonders bevorzugten Ausführungsbeispiel bestimmt die Auswerte- und Steuereinheit 36 kontinuierlich die Impedanz der Zündvorrichtung 72. So kann auf einfache Weise die Trenneinrichtung 54 auf ihre Funktionsfähigkeit hin überprüft werden. Ferner kann das Schaltvermögen der Ansteuerschaltung der Zündvorrichtung 72 durch kurze Stromimpulse getestet werden. Insgesamt kann so eine hohe Fehlerentdeckungswahrscheinlichkeit der Zündvorrichtung 72 gewährleistet werden, was einen hohen Sicherheitsintegritätslevel (SIL) ermöglicht.

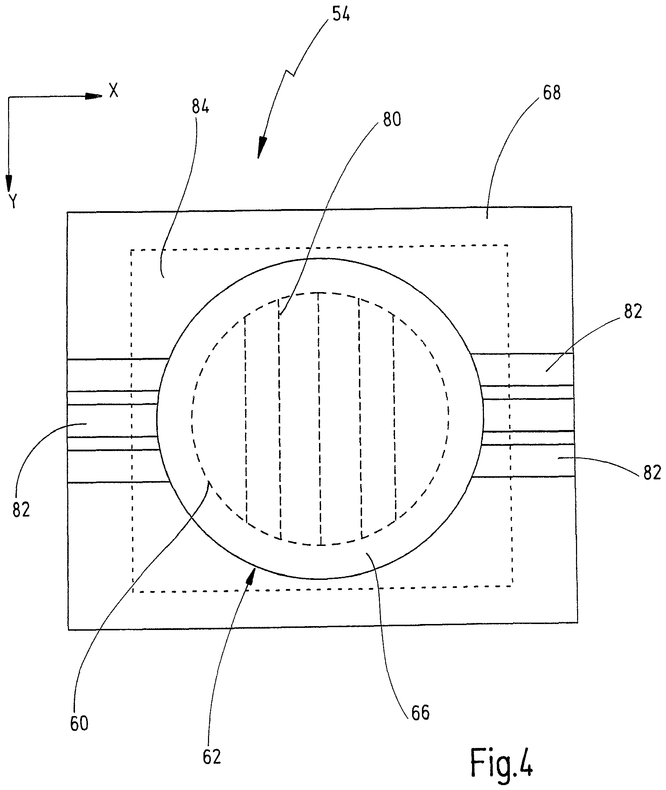

In dem Oberteil 64 ist ferner ein Trennelement 60 angeordnet, das vorzugsweise so in das zylindrische Oberteil 64 eingepasst ist, dass es den Treibstoff 70 vollständig bedeckt. Darüber hinaus sind auf der vom Treibstoff 70 abgewandten Seite des Trennelements 60 spitz zulaufende Dornen oder Zinnen 80 angeordnet, die in Richtung der Leiterplatte 68 weisen. Das Unterteil 66 liegt dem Oberteil 64 passgenau gegenüber und umfasst seinerseits am Grunde liegende Dornen oder Zinnen 80, wobei diese so angeordnet sind, dass die Dornen oder Zinnen des Trennelements 60 in diese eingreifen können. Zwischen den Dornen und Zinnen des Ober- bzw. Unterteils 64, 66 ist ein Kontaktstück 56 angeordnet. Bevorzugt handelt es sich bei dem Kontaktstück 56 um die Fortsetzung einer oder mehrere Leiterbahnen 82 der Leiterplatte 68. Die Leiterbahn oder - bahnen 82 sind dabei ein Teil des Strompfads 50 (Figur 2), welcher das Potential mit den Ausgangsklemmen 26 (Figur 2) verbindet. Besonders bevorzugt ist der Bereich der Leiterplatte 68, welcher innerhalb des Gehäuses 64 liegt, zumindest teilweise aus flexiblen und leicht trennbaren Material. Bspw. könnten die Leiterbahnen 82 in diesem Bereich auf einer Trägerfolie 84 (Fig. 4) aus Polyester oder Polyimid aufgetragen seien.

Wie anhand der Fig. 3b näher erläutert wirken das Antriebselement 58 und das Trennelement 60 zusammen und sind dazu ausgebildet, die Leiterbahn oder - bahnen 82 des Kontaktstücks 56 irreversibel zu trennen. Figur 3b zeigt das Ausführungsbeispiel aus Figur 3a, nachdem der Treibstoff 70 verbrannt worden ist. Bei der Verbrennung handelt es sich vorzugsweise um eine Deflagration, welches ein schneller Brennvorgang ist, bei dem der Explosionsdruck nur durch die entstehenden und sich ausdehnenden Gase hervorgerufen wird. Der Verbrennungsdruck liegt hierbei zumeist in der Größenordnung von 10 bar. Die Verbrennung verläuft in einer Geschwindigkeit, die kleiner ist als die Schallgeschwindigkeit im verbrennenden Medium 70. Durch den entstehenden Druck der Verbrennungsgase 71, der aufgrund des geschlossenen Gehäuses 62 nicht anders entweichen kann, wird das Trennelement 60 vom Oberteil 64 in das Unterteil 66 gedrückt. Dabei zerschneiden die vorstehenden Dornen bzw. Zinnen 80 das Kontaktstück 56 und trennen die Leiterbahn oder -bahnen 82 in zwei oder mehrere Teile.

Im Gegensatz zu den Schaltelementen, die üblicherweise zur Steuerung der Sicherheitsfunktion einer Sicherheitsschaltvorrichtung verwendet werden, beispielsweise Schaltrelais, agiert die vorliegende Trenneinrichtung somit als Einwegschalter, dessen Betätigung nicht umkehrbar ist. Ferner wird im Gegensatz zu einem Relais die Trenneinrichtung aktiv betätigt, um eine Schutzfunktion auszulösen, während üblicherweise bei Sicherheitsschaltvorrichtungen Ruhestromschalter zum Einsatz kommen, d.h. Schalter, die bei einem Strom im Ansteuerkreis die Schutzfunktion nicht auslösen, jedoch dann, wenn dieser Strom abfällt.

Die Energie, die benötigt wird, das Trennelement 60 zu bewegen, ist in der neuen Trenneinrichtung 54 vorteilhaft selbst enthalten, d.h. die Trenneinrichtung 54 kann vorzugsweise unabhängig von einer externen Versorgung das Trennelement 60 bewegen. Die Energie ist bspw. im Treibstoff 70 enthalten oder alternativ in einer gestauchten Springfeder 78, wenn das Antriebselement 58 der Trenneinrichtung 54 auf einem mechanischen Prinzip beruht. Bevorzugt kann somit die Trenneinrichtung 54 die Schutzfunktion auslösen, wenn beispielsweise eine Spannungsversorgung des Sicherheitsschaltgeräts fehlerhaft ist oder ausfällt und gleichzeitig ein Fehler in den Arbeitskontakten 46 oder 48 erkannt wird.

In der Figur 4 ist das Ausführungsbeispiel der Figuren 3a und 3b in einer Draufsicht dargestellt. Figur 4 zeigt aus dieser Perspektive das zylindrische Oberteil 66, das auf einer Leiterplatte 68 aufgesetzt ist. Es versteht sich, dass hier nur ein Ausschnitt der Leiterplatte 68 gezeigt ist, wobei vorzugsweise auch die weiteren elektronischen bzw. elektromechanischen Bauelemente des Sicherheitsschaltgerätes 10 ganz oder teilweise auf der Leiterplatte 68 angeordnet seien können. Abschnitte der der Leiterplatte 68 sind hier als Folie 84 ausgebildet, wie durch den gestrichelten Kasten angedeutet.

Das Oberteil 66 umschließt hier insgesamt drei Leiterbahnen 82. Die Leiterbahnen 82 sind Teilstücke eines schaltbaren Strompfads des Sicherheitsschaltgerätes 10. Innerhalb des Oberteils 66, und somit von außen nicht sichtbar, ist das Trennelement 60 angeordnet, dessen Zinnen 80 hier durch die gestrichelten Linien angedeutet sind. Wie zuvor in Bezug auf die Figuren 3a und 3b beschrieben, ist das Trennelement 60 dazu ausgebildet, die Folie 84 und die darauf befindlichen Leiterbahnen 82 zu durchtrennen. Im vorliegenden Ausführungsbeispiel wird hierbei durch die Deflagration eines Treibstoffs, welcher am Gehäuseboden des Oberteils 66 angeordnet ist, das Trennelement 60 gegen und durch die Folie 84 gedrückt. Das Kontaktstück 56 ist hier somit als Leiterbahnenzug auf einem flexiblen Stück Leiterplatte ausgebildet. Es versteht sich, dass die Erfindung nicht auf die hier gezeigten drei Leiterbahnen 82 beschränkt ist. Ebenso müssen die Leiterbahnen nicht auf der Oberfläche der Leiterplatte 68 oder der Trägerfolie 84 angeordnet seien. In anderen Ausführungsbeispielen kann die Trenneinrichtung 54 eine oder mehrere Leiterbahnen 82 durchtrennen, die ggf. auf unterschiedlichen Seiten oder in unterschiedlichen Schichten der Leiterplatte 68 angeordnet sind.

Ferner ist die Erfindung nicht auf das Ausführungsbeispiel der neuen Trenneinrichtung 54, wie hier in den Figuren 3a, 3b und 4 dargestellt, beschränkt. Alternativ könnte die neue Trenneinrichtung auch auf einem mechanischen Prinzip beruhen, beispielsweise in Form einer Springfeder. Darüber hinaus ist die Trenneinrichtung nicht auf das Durchtrennen eines Leiterbahnteilstückes beschränkt. Im anderen Ausführungsbeispiel könnte das Kontaktstück 56 auch ein separater Leitungsabschnitt sein, dessen Enden mit dem Strompfad 50 in Verbindung gebracht werden. So könnte die Trenneinrichtung in einem anderen Ausführungsbeispiel auch einen Leiter in Form eines Kabels irreversibel trennen.

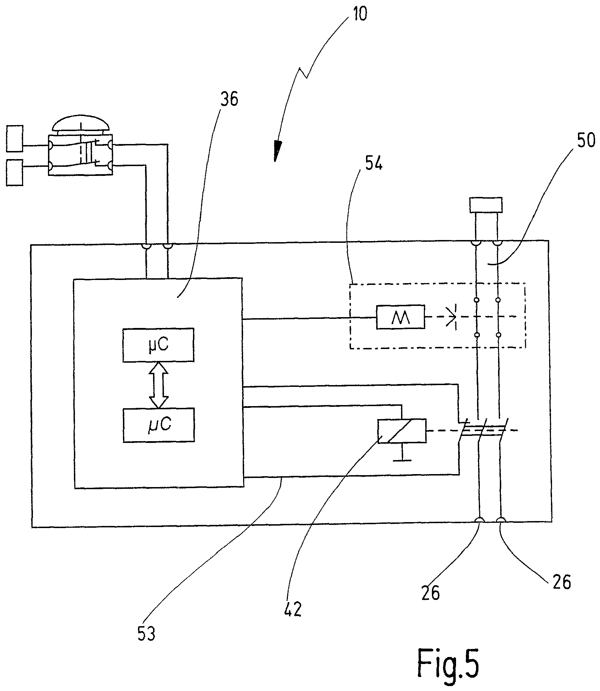

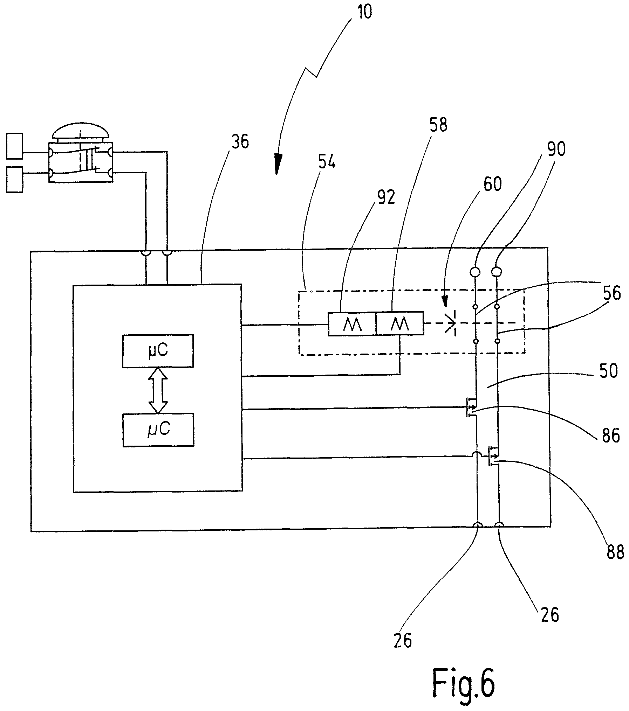

Mit den Figuren 5 und 6 werden im Folgenden zwei weitere Ausführungsbeispiele des neuen Sicherheitsschaltgerätes 10 beschrieben. Gleiche Bezugszeichen bezeichnen gleiche Teile wie in den Ausführungsbeispielen zuvor.

In der Figur 5 ist ein im Vergleich zum Ausführungsbeispiel der Figur 2 vereinfachtes Sicherheitsschaltgerät 10 dargestellt. Der insoweit gleiche Aufbau unterscheidet sich lediglich darin, dass in diesem Ausführungsbeispiel das Sicherheitsschaltgerät 10 einkanalig mit nur einem Schaltelement 42 ausgelegt ist. Anstelle eines redundanten zweiten Schaltelements ist hier zur Gewährleistung der notwendigen Fehlersicherheit die erfindungsgemäße Trenneinrichtung 54 im Strompfad 50 angeordnet. Mit anderen Worten ist in diesem Ausführungsbeispiel das Schaltelement 42 primär für das Ein- und Ausschalten des Strompfads 50 und damit für das Bereitstellen eines entsprechenden Potentials an den Ausgängen 26 maßgeblich, während zur sekundären Absicherung die Trenneinrichtung 54 verwendet wird. Vorzugsweise ist die Trenneinrichtung 54 hierfür mit einem entsprechenden Rückführkreis 53 gekoppelt, der die Arbeitskontakte des Schaltelements 42 mit der Auswerte- und Steuereinheit 36 verbindet, um einen Fehler im Schaltelement 42 zu erkennen, und im Fehlerfall die Trenneinrichtung 54 zu aktivieren. Bei diesem Ausführungsbeispiel kann somit vorteilhafterweise auf ein zweites redundantes Schaltelement verzichtet werden, wodurch ein derartiges Sicherheitsschaltgerät 10 besonders kleinbauend und kostengünstig realisiert werden kann.

In der Figur 6 ist ein weiteres Ausführungsbeispiel eines neuen Sicherheitsschaltgerätes mit einer erfindungsgemäßen Trenneinrichtung 54 dargestellt. Das Sicherheitsschaltgerät 10 basiert auf dem Prinzip des Sicherheitsschaltgeräts gemäß Figur 2, wobei hier der Strompfad 50 durch ein erstes und ein zweites Halbleiterschaltelement 86, 88 geschaltet wird. Darüber hinaus wird das Potential, welches über den Strompfad 50 mit den Ausgängen 26 verbunden wird, in diesem Ausführungsbeispiel intern bereitgestellt, wie hier durch die Bezugsziffer 90 angedeutet. Es versteht sich, dass auch hier das Potential alterativ extern bereitgestellt werden kann. Das erste und das zweite Halbleiterschaltelement 86, 88 sind dazu ausgebildet, das Potential 90 mit den Ausgängen 26 zu verbinden.

Darüber hinaus ist in diesem Ausführungsbeispiel die Trenneinrichtung 54 mit einem weiteren Antriebselement 92 ausgebildet. Das Antriebselement 58 sowie das weitere Antriebselement 92 wirken unabhängig voneinander auf das Trennelement 60 ein. So könnte beispielweise bei einer Trenneinrichtung 54, wie sie mit Bezug auf die Figuren 3a, 3b und 4 beschrieben worden ist, ein zweiter Bereich mit zusätzlichen Treibstoff vorgesehen sein sowie eine weitere Zündvorrichtung, über die dieser Treibstoff gezündet werden kann. In einem anderen Ausführungsbeispiel könnte das weitere Antriebselement 92 jedoch auch auf einem zum Antriebselement unterschiedlichen Prinzip beruhen und bspw. mechanischen mit einer Springfeder ausgebildet seien, wodurch die Diversität des Sicherheitsschaltgeräts weiter erhöht wird. Die Antriebselemente 58, 92 sind vorzugsweise je separat mit der Auswerte- und Steuereinheit 36 verbunden.

Das Trennelement 60 auf das die Antriebelemente 58, 92 einwirken, entzweit, wie zuvor beschrieben, das Kontaktstück bzw. die Kontaktstücke 56 im Strompfad 50. Mit anderen Worten wird in diesem Ausführungsbeispiel eine Redundanz zu den Halbleiterschaltelementen 86, 88 durch die doppelte Auslegung des Antriebselements 58, 92 erreicht. Wie in Bezug auf das Ausführungsbeispiel gemäß Figur 3a, 3b und 4 verdeutlicht, ist eine derart redundante Ausgestaltung des Antriebselements auf einfache und kostengünstig Weise möglich.

Es versteht sich, dass es zu den zuvor beschriebenen Ausführungsbeispielen zahlreiche Variationsmöglichkeiten gibt. Ebenso ist die erfindungsgemäße Trenneinrichtung nicht für die Verwendung für die hier vorgestellten Sicherheitsschaltgeräte begrenzt. Alternativ kann die erfindungsgemäße Trenneinrichtung auch für andere Sicherheitsschaltgeräte, beispielsweise konfigurierbare oder programmierbare Sicherheitssteuerungen, eingesetzt werden, um deren Ausgangsschaltungen über einen zusätzlichen Mechanismus zu sichern. Insbesondere können spezielle Ausgangsmodule solcher Sicherheitsschaltgeräte die erfindungsgemäße Trenneinrichtung aufweisen.

Insgesamt kann durch die neue Trenneinrichtung einerseits die Redundanz und andererseits die Diversität des Sicherheitsschaltgeräts erhöht werden. Alternativ oder ergänzend ermöglicht die neue Trenneinrichtung zudem eine Vereinfachung bisheriger Sicherheitsschaltvorrichtungen, so dass diese kleiner und günstiger hergestellt werden können.

## Patentansprüche

1. Sicherheitsschaltgerät (10) zum Ein- und sicheren Ausschalten eines elektrischen Verbrauchers (12),
mit einer sicheren Auswerte- und Steuereinheit (36),
mit einer Ausgangsklemme (26) zum Bereitstellen eines Potentials (51),
mit einem Schaltelement (42) mit einem ersten Arbeitskontakt (46), wobei über den ersten Arbeitskontakt (46) das Potential (51) mit der Ausgangsklemme (26) verbindbar ist, und
mit einer Eingangsklemme (20) zum Aufnehmen eines Eingangssignals, das über die Auswerte- und Steuereinheit (36) auf das Schaltelement (42) einwirkt, das Sicherheitsschaltgerät (10) beinhaltet eine Trenneinrichtung (54) mit einem Kontaktstück (56), einem Antriebselement (58) und einem Trennelement (60),
wobei das Antriebselement (58) dazu ausgebildet ist, das Trennelement (60) von einer ersten in eine zweite Position mechanisch zu bewegen,
wobei das Kontaktstück (56) und der erste Arbeitskontakt (46) in Reihe zueinander das Potential (51) mit der Ausgangsklemme (26) elektrisch verbinden,
wobei das Trennelement (60) das Kontaktstück (56) in der zweiten Position irreversibel entzweit, **dadurch gekennzeichnet, dass** auch nach Auslösen der Trenneinrichtung (54) das Sicherheitsschaltgerät vollständig diagnosefähig ist.

2. Sicherheitsschaltgerät nach Anspruch 1, **gekennzeichnet dadurch, dass** das Antriebselement (58) das Trennelement (60) von der ersten in die zweite Position bewegt, wenn das Schaltelement (42) eine Fehlfunktion, insbesondere verschweißte Arbeitskontakte, aufweist.

3. Sicherheitsschaltgerät nach einem der Ansprüche 1 oder 2, **gekennzeichnet durch** ein Antriebsenergie zum Bewegen des Trennelements (60) von der ersten in die zweite Position, wobei die Antriebsenergie im Antriebselement (58) gespeichert ist.

4. Sicherheitsschaltgerät nach einem der Ansprüche 1 bis 3, **gekennzeichnet dadurch, dass** das Antriebselement (58) einen Treibstoff (70) und eine Zündvorrichtung (72) aufweist.

5. Sicherheitsschaltgerät nach einem der Ansprüche 1 bis 4, **gekennzeichnet dadurch, dass** das Antriebselement (58) einen Treibstoff (70) aufweist, der mit einer Geschwindigkeit verbrennt, die kleiner ist als die Schallgeschwindigkeit in dem Treibstoff (70).

6. Sicherheitsschaltgerät nach einem der Ansprüche 1 bis 5, **gekennzeichnet durch** mindestens ein weiteres Kontaktstück, welches in der zweiten Position des Trennelements (60) irreversibel entzweit ist.

7. Sicherheitsschaltgerät nach einem der Ansprüche 1 bis 6, **gekennzeichnet durch** mindestens ein zweites Schaltelement (44) mit einem zweiten Arbeitskontakt (48), der zum ersten Arbeitskontakt (46) und dem Kontaktstück (56) in Reihe geschaltet ist.

8. Sicherheitsschaltgerät nach einem der Ansprüche 1 bis 7, **gekennzeichnet durch** ein weiteres Antriebselement (92), welches unabhängig von dem Antriebselement (58), das Trennelement (60) bewegen kann.

9. Sicherheitsschaltgerät nach einem der Ansprüche 1 bis 8, **gekennzeichnet durch** eine Leiterplatte (68), auf der das Schaltelement (42) und die Trenneinrichtung (54) angeordnet sind.

10. Sicherheitsschaltgerät nach einem der Ansprüche 1 bis 9, **gekennzeichnet durch** eine Leiterplatte (68) mit mindestens einer Leiterbahn (82), wobei das Kontaktstück (56) ein Abschnitt der mindestens einen Leiterbahn (82) ist.

## Claims

1. A safety switching device (10) for switching on and safely switching off an electrical load (12) with a failsafe evaluation and control unit (36), an output terminal (26) for providing a potential (51), a switching element (42) having a first working contact (46), wherein the potential (51) can be connected to the output terminal (26) by the first working contact (46), and an input terminal (20) for receiving an input signal for operating the switching element (42) via the evaluation and control unit (36),
the safety switching device (10) comprises:
a separator (54) having a connecting piece (56), a drive element (58) and a separating element (60),
wherein the drive element (58) is configured to mechanically move the separating element (60) from a first position into a second position,
wherein the connecting piece (56) and the first working contact (46) electrically connect in series with one another the potential (51) to the output terminal (26),
wherein in the second position the separating element (60) irreversibly separates the connecting piece (56) into two pieces,
**characterized in that**
the safety switching device is fully diagnosable after the separator (54) has been triggered.

2. The safety switching device as claimed in claim 1, **characterized in that** the drive element (58) moves the separating element (60) from the first position into the second position if the switching element (42) experiences a malfunction, in particular welded working contacts.

3. The safety switching device as claimed in any one of claims 1 or 2, **characterized by** an operating power for moving the separating element (60) from the first position into the second position, wherein the operating power is stored in the drive element (58).

4. The safety switching device as claimed in any one of claims 1 to 3, **characterized in that** the drive element (58) comprises a fuel (70) and an ignition device (72).

5. The safety switching device as claimed in any one of claims 1 to 4, **characterized in that** the drive element (58) comprises a fuel (70) that combusts at a rate that is lower than the sound velocity in the fuel (70).

6. The safety switching device as claimed in any one of claims 1 to 5, **characterized by** at least a further connecting piece that in the second position of the separating element (60) is irreversibly separated into two pieces.

7. The safety switching device as claimed in any one of claims 1 to 6, **characterized by** at least a second switching element (44), having a second working contact (48) that is connected in series to the first working contact (46) and the connecting piece (56).

8. The safety switching device as claimed in any one of the claims 1 to 7, **characterized by** a further drive element (92) that can move the separating element (60) independently from the drive element (58).

9. The safety switching device as claimed in any one of claims 1 to 8, **characterized by** a circuit board (68) on which the switching element (42) and the separator (54) are arranged.

10. The safety switching device as claimed in any one of claims 1 to 9, **characterized by** a circuit board (68) having at least a conductor track (82), wherein the connecting piece (56) is a section of the at least one conductor track (82).

## Revendications

1. Appareil de commutation de sécurité (10) pour la mise en circuit et hors circuit fiable d'un consommateur électrique (12),
comportant une unité fiable d'évaluation et de commande (36),
une borne de sortie (26) pour fournir un potentiel (51),
un élément de commutation (42) avec un premier contact de travail (46), dans lequel le potentiel (51) peut être relié à la borne de sortie (26) par l'intermédiaire du premier contact de travail (46), et
une borne d'entrée (20) pour recevoir un signal d'entrée qui agit sur l'élément de commutation (42) par l'intermédiaire de l'unité d'évaluation et de commande (36), l'appareil de commutation de sécurité (10) comportant un dispositif de coupure (54) pourvu d'une pièce de contact (56), d'un élément d'entraînement (58) et d'un élément de coupure (60),
dans lequel l'élément d'entraînement (58) est conçu pour déplacer mécaniquement l'élément de coupure (60) d'une première position à une deuxième position,
dans lequel la pièce de contact (56) et le premier contact de travail (46) relient électriquement en série le potentiel (51) et la borne de sortie (26) entre eux,
dans lequel l'élément de coupure (60) sépare en deux de manière irréversible la pièce de contact (56) dans la deuxième position,
**caractérisé en ce que** l'appareil de commutation de sécurité peut être entièrement diagnostiqué même après le déclenchement du dispositif de coupure (54).

2. Appareil de commutation de sécurité selon la revendication 1, **caractérisé en ce que** l'élément d'entraînement (58) déplace l'élément de coupure (60) de la première à la deuxième position lorsque l'élément de commutation (42) présente un défaut de fonctionnement, notamment des contacts de travail soudés.

3. Appareil de commutation de sécurité selon l'une des revendications 1 ou 2, **caractérisé par** une énergie d'entraînement destinée à déplacer l'élément de coupure (60) de la première à la deuxième position, dans lequel l'énergie d'entraînement est stockée dans l'élément d'entraînement (58).

4. Appareil de commutation de sécurité selon l'une des revendications 1 à 3, **caractérisé en ce que** l'élément d'entraînement (58) comporte un carburant (70) et un dispositif d'allumage (72).

5. Appareil de commutation de sécurité selon l'une des revendications 1 à 3, **caractérisé en ce que** l'élément d'entraînement (58) comporte un carburant (70) qui subit une combustion à une vitesse qui est inférieure à la vitesse du son dans le carburant (70).

6. Appareil de commutation de sécurité selon l'une des revendications 1 à 5, **caractérisé par** au moins une autre pièce de contact qui se sépare en deux de manière irréversible dans la deuxième position de l'élément de coupure (60).

7. Appareil de commutation de sécurité selon l'une des revendications 1 à 6, **caractérisé par** au moins un deuxième élément de commutation (44) présentant un deuxième contact de travail (48) qui est connecté en série au premier contact de travail (46) et à la pièce de contact (56).

8. Appareil de commutation de sécurité selon l'une des revendications 1 à 7, **caractérisé par** un autre élément d'entraînement (92) qui peut déplacer l'élément de coupure (60) indépendamment de l'élément d'entraînement (58).

9. Appareil de commutation de sécurité selon l'une des revendications 1 à 8, **caractérisé par** une carte de circuit imprimé (68) sur laquelle sont disposés l'élément de commutation (42) et le dispositif de coupure (54).

10. Appareil de commutation de sécurité selon l'une des revendications 1 à 9, **caractérisé par** une carte de circuit imprimé (68) comportant au moins un trajet conducteur (82), dans lequel la pièce de contact (56) constitue une section dudit au moins un trajet conducteur.
